# EUROPEAN PATENT SPECIFICATION

(11) **EP 1 093 748 B1**
(45) Date of publication and mention of the grant of the patent: **07.07.2004**
(21) Application number: 00830676.3
(22) Date of filing: 18.10.2000
(51) Int. Cl.: A47J 43/10, A47J 36/16

(54) **Method and appliance for the preparation of creamy food products**
Verfahren und Gerät zum Zubereiten von cremeartigen Nahrungsmitteln
Méthode et dispositif pour préparer de la nourriture crèmeuse

(30) Priority: 19.10.1999 IT MI992191
(43) Date of publication of application: 25.04.2001
(73) Proprietor: ACT Solutions S.r.l., 21040 Jerago con Orago (VA) (IT)
(72) Inventor: Maccioni, Raffaele, 21012 Cassano Magnago (Varese) (IT)
(74) Representative: Maccalli, Marco

(56) References cited:
- DE-B- 1 051 468
- FR-A- 2 586 922
- FR-A- 2 774 274

## Description

The present invention concerns an appliance, for the preparation, specifically the cooking and mixing, of creamy food products, particularly for the preparation of pastry creams, white sauces (béchamelles) and similar products.

It is known that, for example, the pastry cream is generally produced by making fluffy a creamy mixture of suitable ingredients while at the same time the mixture is subject to cooking according to predetermined conditions.

It is also known that, according to a methodology currently in use, the cooking of the mixture is carried out in a suitable container placed in direct contact with the flame of a stove or similar appliances providing contemporaneously to mix the mixture during the cooking.

The above mentioned methodology anyhow presents the serious disadvantage that the distribution of the heat in the creamy mass of the mixture is rather inadequate so the cooking results to be difficult and little homogeneous.

Furthermore, since the surfaces of the cooking container in contact with the flame reach rather high temperatures, even employing highly qualified personnel, it often happens that part of the mass of the mixture remains attached to the bottom of this container leaving bad flavours in the final cream.

Another methodology currently in use for the production of pastry creams consists in cooking the creamy mixture with the use of cooking machines for example consisting of two cooking containers in bain-marie (double saucepan) providing contemporaneously to blend the mixture while it cooks.

Anyway, this methodology presents the serious disadvantage of having high costs in investments, maintenance and equipment cleaning, insufficient flexibility in the personalization of the recipes compared to the working standards foreseen for the single machine.

Moreover the cooking with this type of machinery (cream-cookers) involves a high energy-consumption and long times for the preparation of the product.

This limits the possibility to dose the quantities of the ingredients for the mixture for limited daily uses of the final cream to the detriment in the freshness of the final cream which necessarily has to last longer.

Finally, with the methodologies foreseen by the known technique, and particularly with those methodologies that use stoves, it is necessary to employ highly qualified personnel to obtain a quality product with acceptable organoleptic characteristics.

FR-A-2 774 274 describes a device for heating and/or cooking food, specifically food for babies. The device comprises: a steam generator producing steam for heating or cooking food; a cooking container, receiving a removable cooking basket provided with through apertures arranged in the proximity of the base to allow the steam through, said container being reversibly sealed at its upper end with a removable lid. The removable lid is provided with a through aperture, to allow the steam generator to communicate with the container inside, and particularly the cooking basket inside. The container is provided with a through aperture arranged substantially near the top end of the wall defining it.

The technical problem at the base of the present invention is to provide an appliance for the preparation of creamy food products, particularly for the cooking and mixing of creamy food mixtures, with which it is possible to prepare creamy food products, particularly pastry creams, with good organoleptic characteristics and of quality without having the disadvantages previously mentioned in reference to the prior art.

Such problem is solved by an appliance for the preparation of creamy food products as defined by the appended independent claim 1. The features and advantages of the present invention will appear from the here following description of some preferred embodiments thereof, given merely by way of non-limiting examples with reference to the enclosed drawings, wherein:
- figure 1 is a frontal view of a tool for cooking and mixing a mass of creamy mixture to obtain creamy food products, according to a first practical embodiment of the invention;
- figure 2 is a cross-section of the tool of figure 1;
- figure 3 is a cross-section of a cooking and mixing tool according to another possible practical embodiment of the present invention;
- figure 4 is a practical embodiment of the cooking appliance, in which a cooking fluid is directly conveyed into a container for a mass of creamy mixture; and
- figure 5 shows a practical embodiment of the cooking appliance, substantially a variation of the embodiment of figure 4.

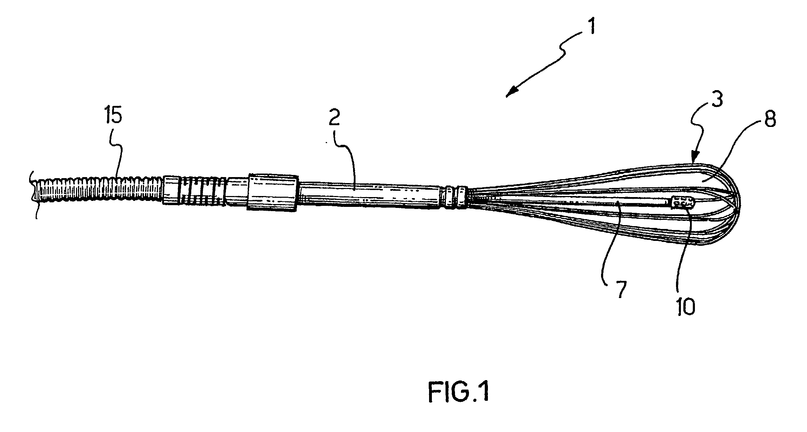

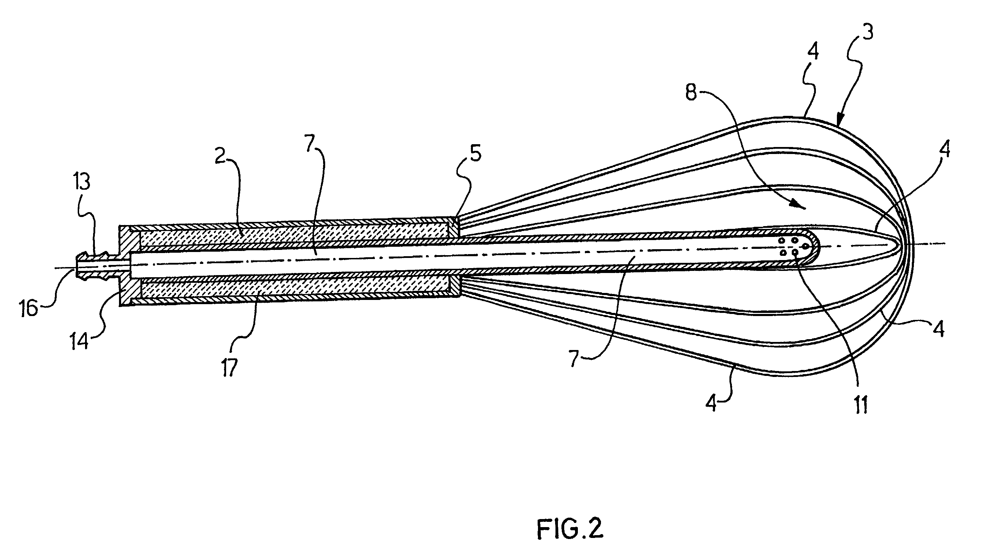

Referring to figures 1 and 2, a tool for the cooking and mixing of creamy food products is globally indicated with 1.

The tool 1 comprises a handle 2 with the shape of a cylindrical tubular body provided with a bottom in correspondence with one of its ends 5.

The tool 1 further comprises mixing means globally indicated with 3 connected to the end 5 of said handle 2 for mixing a creamy product.

In the present embodiment form the above mentioned mixing means 3 comprise a plurality of wires 4 made of a material for food folded and twined so as to form a whisk.

The material used for the wires 4 can be for example stainless steel, Teflon and/or non-toxic rubber.

Obviously, the tool 1 according to the invention can comprise mixing means different from the above mentioned whisk as for example mixing blades and similar devices.

The handle 2 internally comprises a coaxial tube 7 for the conveying of a cooking fluid, for example water vapour, in proximity of said wires 4.

The tube 7 protrudes from the end 5 of the handle 2 in an inner zone 8 defined by said wires 4 and presents in correspondence to its end in the zone 8 a diffuser 10 provided with a plurality of little holes 11 to distribute the cooking fluid on the mass of the creamy product.

Obviously, the length of the concentric tube 7 in the zone 8 can be easily varied by the skilled technician for contingent and specific requirements or also if necessary the tube 7 can end in correspondence with the end 5 of the handle 2, without protruding from it, in that case it can be foreseen to connect the diffuser 10 to the end 5 in communication of fluid with the coaxial tube 7.

Moreover, the portion of the tube 7 in the above mentioned zone 8 if needed can be provided with a plurality of diffusers 10 or also the tube 7 can be provided with a plurality of holes to increase the efficiency of the diffusion of the cooking fluid into the mass of the creamy product.

Finally, the skilled technician can foresee in the tool according to the invention more than one conveying tube for the cooking fluid.

In the tool 1 according to the invention, the open end of the tube 7 in the inside of the handle 2 is connected in communication of fluid to suitable conventional coupling means which can be coupled with a flexible tube 15 of a conventional appliance for the output of a cooking fluid, for example steam.

In the present embodiment, exemplificative and not restrictive, the abovementioned coupling means are composed of a wrinkled appendix 13 of a cap 14 apt to be fit by a flexible tube 15 of the above mentioned conventional appliance.

In the present embodiment of the invention, the cap 14 engages the end of the handle 2 opposite to the mixing means 3 and is connected and sealed to the end of the tube 7 inside the handle 2.

In addition the appendix 13 presents internally a channel 16 which puts in communication of fluid the tube 7 to the outside so as the tool 1 can receive the cooking fluid from a conventional appliance that supplies such fluid.

Furthermore the tool 1 can comprise an insulation material 17 placed between the body of the handle 2 and the coaxial tube 7 the purpose of which is to thermally isolate the operator from the heat produced by the cooking fluid.

The tool 1 up to here described is apt to be used manually by the operator.

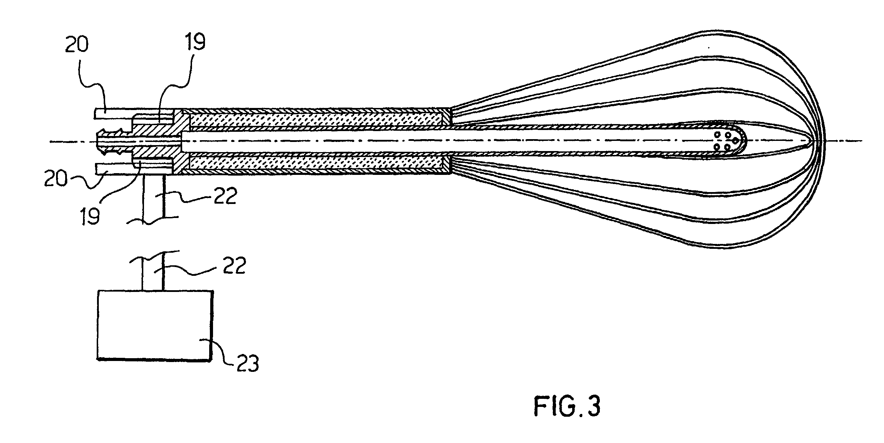

According to another embodiment, depicted in figure 3, the tool according to the invention can furthermore comprise means for the hooking to a motorized device to consent the automatic functioning of the tool.

In the embodiment shown in figure 3, such hooking means comprise a portion 18 obtained on the cap 14 provided on its ends with threadings 19 to be connected to a sleeve 20 integral with a mechanical arm 22 which gives a rotating movement to the tool 1 for the mixing of the creamy product when it is actioned in a conventional way by a suitable motor 23.

The major advantage of the tool according to the present invention resides in the fact that with it the cooking of a creamy mixture results to be homogeneous and at a substantially constant temperature thanks to the combined effect of the mixing tools and of a diffuser that consent to distribute efficaciously and in a homogeneous way the heat of the cooking fluid throughout the whole mass of the creamy mixture avoiding local overheating.

According to the invention the tool aqdvantageously consents the preparation of high quality creamy food products, particularly pastry creams which distinguish themselves for the characteristics of goodness and lightness with which they are produced.

Moreover, the cooking fluid, preferably water vapour can be conveyed through the mass of the creamy mixture at a temperature that consents a contemporaneous cooking and sterilization of such mixture.

A further advantage of the tool according to the invention resides in its simpleness and economy of design and realization.

Another advantage of the tool according to the invention resides in its easiness in use which doesn't necessarily require highly qualified personnel.

A further advantage of the invention resides in the fact that the pastry cream can be prepared by the above-mentioned tool in short time in the order of a few minutes with professionally limited operators.

This consents to produce quantities of cream that vary as required with all the benefit in the freshness of the product and in a reduction in stocking times and energy-consumption.

According to the present invention, a skilled technician on the purpose to satisfy further contingent requirements will be able to carry out on the tool a large number of further modifications and variations all however comprised in the protection scope of the appended claims.

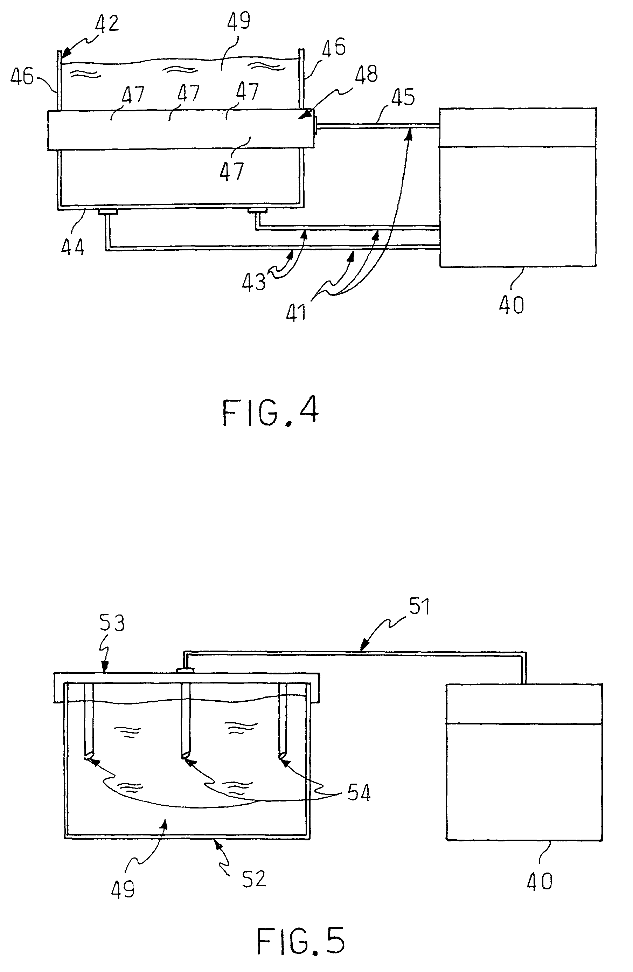

Figure 4 shows a possible embodiment of the cooking appliance, in which the cooking fluid, for example water vapour, produced by a suitable generator 40, for example a vapour generator, is directly conveyed, through cooking fluid conveying means such as a pipe or, preferably, a pipe system 41, into a container 42 that contains a mass 49 of creamy mixture, made for example of stainless steel. The pipe system 41 can generally comprise pipes that have outlets in different positions on the surface of the container depending on the dimension and shape of the same container. For example, as shown in figure 4, the pipe system 41 can comprise a first subset of pipes 43, that have outlets in the container 42 in correspondence to a bottom 44 thereof, and a second subset of pipes 45, if necessary also consisting of only one pipe, which, through a cooking fluid distribution chamber 48 that envelopes the lateral surfaces 46 of the container 42 and a plurality of openings 47 foreseen in the lateral surfaces 46 of the same container 42 that act as nozzles through which the cooking fluid can pass from the distribution chamber 48 to the inside of the container 42.

In figure 5 is shown another further embodiment of the cooking appliance, substantially a variation of the previous embodiment, in which the cooking fluid produced by the generator 40 is conveyed into the mass 49 of the creamy mixture by means of one or more pipes 51 that carry the cooking fluid into a distribution chamber composed of a cover 53 for the container 52, from this cover one or preferably a plurality of tubes 54 branch off so as to extend inside the container 52 and end with cooking fluid output nozzles. The tubes extend in a sufficient measure to penetrate into the mass 49 of creamy mixture, to get the cooking fluid conveyed into the same mass 49.

It must be observed that both in the embodiment of figure 4 and in the one of figure 5, the cooking fluid performs the cooking function of the mass of the creamy mixture, and the function of mixing the mass while it cooks, thanks to the turbulence it creates in the mass of the creamy mixture; it isn't to be excluded anyhow the contemporaneous presence of mechanical mixing systems. It is therefore possible to use the container in combination with or without mechanical mixing tools.

## Claims

1. Appliance for the preparation of creamy food products, particularly pastry creams, white sauces (bèchamelles) and similar products, comprising means for cooking a mass (49) of creamy mixture and mixing means for mixing the mass of creamy mixture during the cooking, said cooking means comprising means (7;41,43,45,47,48;51,53,54) for conveying a cooking fluid into the mass of the creamy mixture, **characterized by** comprising at least one tool (1) with a handle (2) to which are connected the mixing means (3), the means for conveying the cooking fluid being apt to convey the same cooking fluid in proximity to these mixing means (3).

2. Appliance according to claim 1, in which said cooking fluid is water vapour.

3. The appliance according to claim 1 or 2, in which said handle (2) of the tool (1) comprises a cylindrical tubular body provided internally with at least one coaxial tube (7) for the conveying of the cooking fluid in proximity to said mixing means (3).

4. The appliance according to claim 3, in which said mixing means (3) comprise a plurality of wires (4) folded and twined so as to form a whisk made of a material for food connected at an end (5) of said handle (2) of the tool (1).

5. The appliance according to claim 4, in which at least one coaxial tube (7) protrudes from this handle (2) of the tool (1) in an inner zone (8) defined by said mixing wires (4).

6. The appliance according to claim 5, in which a portion of the above-mentioned at least one coaxial tube (7) in said zone (8) presents at least one diffuser (10) of the cooking fluid provided with a plurality of little holes (11).

7. The appliance according to claim 6 in which said at least one diffuser (10) is located in correspondence with the end of said at least one coaxial tube (7) in said zone (8).

8. The appliance according to anyone of the previous claims from 3 to 7, in which the tool (1) further comprises coupling means for the coupling of a flexible tube (15) for delivering the cooking fluid in communication of fluid with said at least one coaxial tube (7).

9. The appliance according to claim 8 in which said coupling means comprise a cap (14) connected and sealed to the end of said at least one coaxial tube (7) inside the handle (2) of the tool (1) and in connection with said handle (2), including a wrinkled appendix (13) apt to fit the flexible tube (15) and a passing channel (16) in communication of fluid with the coaxial tube (7).

10. The appliance according to anyone of the claims from 3 to 9, further comprising an insulation material (17) between said at least one coaxial tube (7) and the body of the handle (2) of the tool (1).

11. The appliance according to anyone of the previous claims from 3 to 10, further comprising means for the hooking of said tool (1) to a motorized device.

12. The appliance according to claim 11 in which said means for the hooking of the tool (1) to the motorized device comprise a portion (18) of the cap (14) provided with threadings (19) on its ends to be connected to said motorized device.

13. The appliance according to claim 1, including a container (42;52,53) for the mass (49) of creamy mixture and a cooking fluid input system (41,45,46,47,48;51,53,54) to said container, to receive and convey the cooking fluid into the mass of the creamy mixture contained in the container.

14. The appliance according to claim 13, in which said input system (41,45,46,47,48;51,53,54) is connected to means (40) of generation of the cooking fluid.

15. The appliance according to claim 14, in which said means (40) of generation of the cooking fluid comprise a water vapour generator.

16. The appliance according to claim 13, 14 or 15, in which said input system (41,45,46,47,48) inputs the cooking fluid through nozzles provided in the bottom surfaces (44) and/or lateral surfaces (46) of the container (42).

17. The appliance according to claim 13, 14 or 15, in which said input system (51,53,54) inputs the cooking fluid to the container (52) through at least one tubular pipe, which ends with an output nozzle, that extends into the container from a cover (53) capable of being associated to the container.

18. The appliance according to anyone of the claims from 13 to 17, in which said mixing means of the mass of creamy mixture comprise mechanical means capable of being associated to the container.

19. The appliance according to anyone of the claims from 13 to 17, in which the same water vapour conveyed into the mass of creamy mixture contributes to mixing the mass of creamy mixture.

## Patentansprüche

1. Gerät für die Vorbereitung von cremigen Nahrungsprodukten, . vor allem Konditorcremen, weißen Soßen (Béchamelsoßen) und ähnlichen Produkten, umfassend Mittel für das Kochen einer Masse (49) von cremiger Mischung und Mischmittel für das Mischen der cremigen Mischung während des Kochens, solche Kochmittel umfassend Mittel (7; 41, 43, 45, 47, 48; 51, 53, 54) für die Zuführung einer Kochflüssigkeit in die Masse der cremigen Mischung, **dadurch gekennzeichnet, dass** sie mindestens einen Werkzeug (1) umfassen mit einem Griff (2) mit dem die Mischmittel (3) verbunden sind, wobei die Mittel für die Zuführung der Kochflüssigkeit geeignet sind, um eine solche Kochflüssigkeit in der Nähe von diesen Mischmitteln (3) zuzuführen.

2. Gerät nach Anspruch 1, wobei eine solche Kochflüssigkeit Wasserdampf ist.

3. Gerät nach Anspruch 1 oder 2, wobei ein solcher Griff (2) des Werkzeugs (1) einen röhrenförmigen Zylinderkörper umfasst, der mindestens ein Koaxialrohr (7) für die Zuführung einer solchen Kochflüssigkeit in der Nähe von diesen Mischmitteln (3) enthält.

4. Gerät nach Anspruch 3, wobei solche Mischmittel (3) eine Mehrheit von Drahten umfassen, die gebogen und geflochten sind, um einen Schneebesen aus einem Material für Nahrungsmittel zu bilden und die mit einer Ende eines solchen Griffs (2) des Werkzeugs (1) verbunden sind.

5. Gerät nach Anspruch 4, wobei mindestens ein Koaxialrohr (7) aus einem solchen Griff (2) in eine innere Zone (8) vorsteht, die von solchen Mischdrahten (4) bestimmt wird.

6. Gerät nach Anspruch 5, wobei ein Teil des obengenannten mindestens einen Koaxialrohrs (7) in einer solchen Zone (8) mindestens einen Diffusor (10) dieser Kochflüssigkeit aufweist, der mit einer Mehrheit von kleinen Löchern (11) versehen ist.

7. Gerät nach Anspruch 6, wobei ein solcher mindestens Diffusor (10) sich zur Ende eines solchen mindestens Koaxialrohrs (7) in einer solchen Zone (8) befindet.

8. Gerät nach einem der vorherigen Ansprüche 3 bis 7, wobei der Werkzeug (1) zusätzlich Mittel für die Kupplung eines flexiblen Rohrs (15) für die Lieferung der Kochflüssigkeit umfasst, das mit einem solchen mindestens Koaxialrohr (7) in Flüssigkeitsverbindung steht.

9. Gerät nach Anspruch 8, wobei solche Kupplungsmittel einen Stopfen (14) umfassen, der mit der Ende eines solchen mindestens Koaxialrohrs (7) im Inneren des Griffs (2) verbunden ist. Eine solche Ende ist mit einem solchen Griff (2) verbunden und umfasst einen gerunzelten Fortsatz (13), um einem solchen flexiblen Rohr (15) anzupassen, und einen durchgehenden Kanal (16), der mit einem solchen Koaxialrohr (7) in Flüssigkeitsverbindung steht.

10. Gerät nach einem der Ansprüche 3 bis 9, zusätzlich umfassend einen Isolierstoff (17) zwischen einem solchen mindestens Koaxialrohr (7) und dem Körper eines solchen Griffs (2) des Werkzeugs (1).

11. Gerät nach einem der Ansprüche 3 bis 10, zusätzlich umfassend Mittel für die Kupplung eines solchen Werkzeugs (1) zu einer motorisierten Vorrichtung.

12. Gerät nach Anspruch 11, wobei solche Mittel für die Kupplung des Werkzeugs (1) zur motorisierten Vorrichtung einen Teil (18) eines solchen Stopfens (14) umfassen, der Gewinde (19) an seinen Enden für die Verbindung mit einer solchen motorisierten Vorrichtung aufweist.

13. Gerät nach Anspruch 1, umfassend einen Behälter (42; 52, 53) für die Masse (49) der cremigen Mischung und ein Zuführungssystem der Kochflüssigkeit (41, 45, 46, 47, 48; 51, 53, 54) zu einem solchen Behälter, um die Kochflüssigkeit in die Masse der cremigen Mischung im Behälter zu erhalten und zuzuführen.

14. Gerät nach Anspruch 13, wobei ein solches Zuführungssystem (41, 45, 46, 47, 48; 51, 53, 54) mit Mitteln (40) für die Erzeugung der Kochflüssigkeit verbunden ist.

15. Gerät nach Anspruch 14, wobei solche Mittel (40) für die Erzeugung der Kochflüssigkeit einen Wasserdampferzeuger umfassen.

16. Gerät nach Anspruch 13, 14 oder 15, wobei ein solches Zuführungssystem (41, 45, 46, 47, 48; 51, 53, 54) die Kochflüssigkeit durch Düsen einlässt, die sich in den untersten (44) und/oder seitlichen Oberflächen (46) des Behälters (42) befinden.

17. Gerät nach Anspruch 13, 14 oder 15, wobei ein solches Zuführungssystem (51, 53, 54) die Kochflüssigkeit in den Behälter (52) durch mindestens ein röhrenförmiges Rohr einlässt, das mit einer Ausstoßdüse endet, die sich aus einem Deckel (53) erstreckt, der sich mit dem Behälter verbinden kann.

18. Gerät nach einem der Ansprüche 13 bis 17, wobei solche Mischmittel für das Mischen der Masse von cremiger Mischung mechanische Mittel umfassen, die sich mit dem Behälter verbinden können.

19. Gerät nach einem der Ansprüche 13 bis 17, wobei die gleiche Menge vom Wasserdampf in die Masse der cremigen Mischung beim Mischen der Masse von cremiger Mischung mitwirkt.

## Revendications

1. Dispositif pour la préparation d'aliments crémeux, surtout de crèmes pâtissières, sauce béchamel et similaires, comprenant moyens pour la cuisson d'une masse (49) de mélange crémeux et un moyen mélangeur pour le mixage du mélange crémeux durant la cuisson, ce moyens pour la cuisson comprenant aussi des moyens (7 ; 41 , 43 , 45 , 47, 48 ; 51, 53 , 54) pour l'adduction d'un fluide de cuisson à la masse de mélange crémeux, **caractérisé par** au moins un outil (1) muni d'une poignée (2), branché au moyen mélangeur (3), les moyens pour l'adduction du fluide à la masse étant appropriés à l'adduction d'un tel fluide à proximité de ce moyen mélangeur (3).

2. Dispositif selon la revendication 1, **caractérisé en ce que** le fluide employé est de la vapeur.

3. Dispositif selon les revendications 1 ou 2, **caractérisé en ce que** la poignée (2) de l'outil (1) comprend un corps tubulaire cylindrique, comprenant à l'intérieur au moins un tube coaxial (7) pour l'adduction de tels fluides pour la cuisson à proximité de ce moyen mélangeur (3).

4. Dispositif selon la revendication 3, **caractérisé en ce que** le moyen mélangeur (3) se compose d'une série de fils métalliques, courbés et nattés, créant un fouet d'un matériel apte à l'alimentation, branché à l'extrémité (5) de la poignée (2) de l'outil (1).

5. Dispositif selon la revendication 4, **caractérisé en ce qu'**au moins un tube coaxial (7) se dirige, à partir de cette poignée, vers la zone interne, déterminée par ces fils mélangeurs métalliques.

6. Dispositif selon la revendication 5, **caractérisé en ce qu'**au moins une partie du susmentionné au moins un tube coaxial (7) dans la zone (8) en question est pourvu d'au moins un diffuseur (10) du fluide pour la cuisson, lui-même pourvu d'une série de petit forets (11).

7. Dispositif selon la revendication 6, **caractérisé en ce qu'**au moins un diffuseur (10) se trouve en correspondance avec l'extrémité d'un tel tube coaxial (7) dans telle zone (8).

8. Dispositif selon une quelconque des précédentes revendications de 3 à 7, **caractérisé en ce que** l'outil (1) comprend en plus l'attelage d'une tube flexible (15) pour l'adduction du liquide pour la cuisson, formant une connexion avec ce tube coaxial (7).

9. Dispositif selon la revendication 8, **caractérisé en ce que** le système d'attelage comprend un bouchon (14) branché et scellé à l'extrémité d'au moins un tube coaxial (7), à l'intérieur de la poignée (2) du dispositif (1) et branché à telle poignée, comprenant une appendice ridée (15), apte à s'adapter au tube flexible, et un canal continu (16) en relation fluide avec le tube coaxial.

10. Dispositif selon une quelconque des revendications de 3 à 9, comprenant en outre un isolant (17) entre le tube coaxial et le corps de la poignée (2) de l'outil (1).

11. Dispositif selon une quelconque des revendications de 3 à 10, comprenant un moyen pour le branchement d'un tel outil (1) à un dispositif à moteur.

12. Dispositif selon la revendication 11, **caractérisé en ce que** le moyen de branchement de l'outil (1) à un dispositif à moteur, comprend une partie (18) d'un tel bouchon (14) qui présente des filets (19) aux extrémités pour la connexion à tels dispositifs à moteur.

13. Dispositif selon la revendication 1, comprenant un récipient (42 ; 52, 53) pour la masse (49) du mélange crémeux et un moyen pour l'adduction du fluide pour la cuisson (41, 45, 46, 47, 48; 51, 53, 54) vers un tel récipient, pour maintenir et ajouter le liquide pour la cuisson dans la masse du mélange crémeux à l'intérieur du récipient.

14. Dispositif selon la revendication 13, **caractérisé en ce que** tel système d'adduction (41, 45, 46, 47, 48; 51, 53, 54) est relié à des moyens (40) de production du fluide pour la cuisson.

15. Dispositif selon la revendication 14, **caractérisé en ce que** le moyen (40) pour la production du fluide pour la cuisson, est un générateur de vapeur d'eau.

16. Dispositif selon la revendication 13, 14 ou 15, **caractérisé en ce que** un tel système d'adduction (41, 45, 46, 47, 48; 51, 53, 54) fait couler le fluide au moyen de buses, qui se trouvent sur la surface inférieure (44) et/ou latérale (46) du récipient.

17. Dispositif selon la revendication 13, 14 ou 15, **caractérisé en ce que** un tel système d'adduction (51, 53, 54) fait couler le liquide pour la cuisson, à l'intérieur du récipient (52) au moyen d'un tube cylindrique, qui termine avec une buse de débit, qui s'étend du couvercle (53) et qui peut être relié au couvercle du récipient.

18. Dispositif selon une quelconque des revendications de 13 à 17, **caractérisé en ce que** les moyens de mélange pour le mixage de mélanges crémeux, comprennent des moyens mécaniques qui peuvent être branchés au récipient.

19. Dispositif selon une quelconque des revendications de 13 à 17, **caractérisé en ce que** la même quantité de vapeur d'eau dans la masse de mélange crémeux contribue au mixage de la masse de mélange crémeux.
